**Europäisches Patentamt**

**European Patent Office**

**Office européen des brevets**

(11) Veröffentlichungsnummer: **0 263 317**
**A1**

# (12) EUROPÄISCHE PATENTANMELDUNG

(21) Anmeldenummer: **87113239.5**

(22) Anmeldetag: **10.09.87**

(51) Int. Cl.⁴ **B01D 53/34**

(30) Priorität: **27.09.86 DE 3632896**

(43) Veröffentlichungstag der Anmeldung:
**13.04.88 Patentblatt 88/15**

(84) Benannte Vertragsstaaten:
**AT BE DE ES GB IT NL**

(71) Anmelder: **KRC Umwelttechnik GmbH**
**Alfred-Nobel-Strasse 20**
**D-8700 Würzburg 1(DE)**

(72) Erfinder: **Gutmayer, Harald, Dr.-Ing.**
**Den-Haager-Strasse 16**
**D-8700 Würzburg(DE)**
Erfinder: **Kelm, Wienold, Dr.-Ing.**
**Leinacher Weg 13b**
**D-8705 Zellingen(DE)**

(74) Vertreter: **Werner, Hans-Karsten, Dr. et al**
**Deichmannhaus am Hauptbahnhof**
**D-5000 Köln 1(DE)**

(54) Verfahren zum nassen Entfernen von Schwefelddioxid.

(57) Das Verfahren zum nassen Entfernen von Schwefeldioxid aus Rauchgasen unter Verwendung einer Kalkstein enthaltenden Absorptionsmittelsuspension arbeitet in der Weise, daß

a) im Sumpf einer Vorstufenabsorption im pH-Bereich von 4 bis 5 durch Einleiten von Luft in die Suspension Sulfit zum Sulfat oxidiert und grobkörniger Gips als feststoffreiche Suspension aus dem System ausgeschleust wird,

b) in einer Nachstufenabsorption im pH-Bereich von ca. 6 das Schwefeldioxid des Rauchgases durch die Absorptionsmittelsuspension als Sulfit gebunden und diese in einem Ablauf separat aufgefangen und in den Vorratstank für die Absorptionsmittelsuspension zurückgeführt wird,

c) die Wasserverluste der Vorstufenabsorption durch den Überlauf der Absorptionsmittelsuspension ausgeglichen,

d) die Wasserverluste der Nachstufenabsorption durch das Waschwasser einer nachgeschalteten Tropfenabscheidung ausgeglichen werden, wobei jetzt die Nachstufenabsorption räumlich neben, aber oberhalb der Vorstufenabsorption und direkt oberhalb des Vorratstanks für die Absorptionsmittelsuspension durchgeführt wird.

## Verfahren zum nassen Entfernen von Schwefeldioxid

Gegenstand der vorliegenden Erfindung ist ein Verfahren zum nassen Entfernen von Schwefeldioxid aus Rauchgasen unter Verwendung einer Kalkstein enthaltenden Absorptionsmittelsuspension, bei dem

a) im Sumpf einer Vorstufenabsorption im pH-Bereich von 4 bis 5 durch Einleiten von Luft in die Suspension Sulfit zum Sulfat oxidiert und grobkörniger Gips als feststoffreie Suspension aus dem System ausgeschleust wird,

b) in einer Nachstufenabsorption im pH-Bereich von ca. 6 das Schwefeldioxid des Rauchgases durch die Absorptionsmittelsuspension als Sulfit gebunden und diese in einem Ablauf separat aufgefangen und in den Vorratstank für die Absorptionsmittelsuspension zurückgeführt wird.

c) die Wasserverluste der Vorstufenabsorption durch den Überlauf der Absorptionsmittelsuspension ausgeglichen,

d) die Wasserverluste der Nachstufenabsorption durch das Waschwasser einer nachgeschalteten Tropfenabscheidung ausgeglichen werden.

Ein derartiges Verfahren ist beispielsweise bekannt aus der DE-OS 30 11 592.5. Derartige Anlagen werden von der Anmelderin seit Jahren angeboten und gebaut. Bei diesen Anlagen sind in einem Turm von unten nach oben übereinander gebaut der Sumpf der Vorstufenabsorption, die Sprühanlagen für die Vorstufenabsorption, die - schüsselartige Vorrichtung zum separaten Auffangen der Absorptionsmittelsuspension der Nachstufenabsorption, die Sprüheinrichtungen der Nachstufenabsorption sowie die Tropfenabscheidung.

Dieses Verfahren und diese Vorrichtung haben sich ausgezeichnet bewährt. Sie weisen jedoch den Nachteil auf, daß bei Rauchgasen mit hohem Chloridgehalt ein unerwünscht hoher Anteil des Chlorids auch in die Nachstufenabsorption gelangt. Ein hoher Chloridgehalt in der Absorptionsmittelsuspension der Nachstufenabsorption ist jedoch unerwünscht und kann das Absorptionsvermögen der Suspension beeinträchtigen. Der Chloridgehalt des Rauchgases wird bei diesen Verfahren an sich vollständig von der Vorstufenabsorption abgefangen, jedoch wird durch den Rauchgasstrom stets eine gewisse Menge des Absorptionsmittels der Vorstufenabsorption in den Kreislauf der Nachstufenabsorption mitgerissen, so daß auf diesem mechanischem Wege Chlorid in die Absorptionsmittelsuspension der Nachstufenabsorption gelangt.

Die Erfindung hat sich daher zunächst einmal die Aufgabe gestellt, die Menge an mitgerissenem Absorptionsmittel der Vorstufenabsorption zu verringern und dadurch das Gesamtverfahren auch bei hohem Chloridgehalt des Rauchgases voll wirksam zu gestalten. Die Erfindung hat sich weiterhin die Aufgabe gestellt, entweder die Baukosten der Gesamtanlage zu senken oder aber bei gleichen Baukosten die Wirksamkeit des Verfahrens zu steigern.

Diese Aufgaben können überraschend einfach dadurch gelöst werden, daß die Nachstufenabsorption räumlich neben, aber oberhalb der Vorstufenabsorption und direkt oberhalb des Vorratstanks für die Absorptionsmittelsuspension durchgeführt wird.

Konstruktiv bedeutet dies, daß in dem ersten Turm nur noch der Sumpf der Vorstufenabsorption sowie die Sprüheinrichtungen der Vorstufenabsorption untergebracht sind.

Von hier aus werden die Rauchgase direkt in einen daneben stehenden Turm geleitet, in welchem unten als Sumpf die Absorptionsmittelsuspension vorhanden ist, über der sich dann die Sprüheinrichtung der Nachstufenabsorption befindet sowie darüber die Tropfenabscheidung.

Vorzugsweise findet zwischen der Vorstufenabsorption und der Nachstufenabsorption eine weitere Tropfenabscheidung statt, durch die vermieden wird, daß Absorptionsmittelsuspension der Vorstufenabsorption in die Nachstufenabsorption mitgerissen wird. Dadurch ist es möglich, den Chloridgehalt in der Nachstufenabsorption so drastisch zu senken, daß der zweite Turm materialmäßig aus einfacheren Baustählen hergestellt werden kann, die wegen ihrer Chloridempfindlichkeit normalerweise nicht in Frage kamen. Nur der Turm der Vorstufenabsorption muß erfindungsgemäß jetzt noch aus chloridunempfindlichen Spezialstählen hergestellt werden.

Ein weiterer Vorteil des erfindungsgemäßen Verfahren besteht darin, daß der bisher ungenutzte Raum zwischen dem Pegel der Absorptionsmittelsuspension der Nachstufenabsorption und der Oberkante des Vorratsgefäßes für Absorptionsmittelsuspension jetzt genutzt werden kann für die Nachstufenabsorption. Es kann daher entweder die Nachstufenabsorption entsprechend verkürzt werden oder bei gleicher Bauhöhe die Wirksamkeit der Nachstufenabsorption erhöht werden.

Wie beim Stand der Technik, kann der sulfitreiche und feststoffarme Überlauf der Absorptionsmittelsuspension der Nachstufenabsorbtion zum Ausgleich der Wasserverluste der Vorstufenabsorption verwendet werden. Die Wasserverluste der Nachstufenabsorption werden wie bisher durch das Waschwasser der nachgeschalteten Tropfenabscheidung ausgeglichen.

Die vorzugsweise zwischen der Vorstufenabsorption und der Nachstufenabsorption zusätzlich vorgesehene Tropfenabscheidung kann entweder mit dem feststoffarmen Überlauf der Absorptionsmittelsuspension der Nachstufenabsorption oder aber mit weiterem Frischwasser gewaschen werden. Dies würde bedeuten, daß die Wasserverluste der Vorstufenabsorption erfindsungsgemäß nur noch zum größten Teil durch den feststoffarmen Überlauf des Absorptionsmittels ausgeglichen werden und ein kleinerer Teil durch das Waschwasser der zusätzlichen Tropfenabscheidung.

Ein weiterer Vorteil des erfindungsgemäßen Verfahrens besteht darin, daß die bisher notwendige Brüdenableitung oberhalb des Vorratstanks für die Absorptionsmittelsuspension völlig entfallen kann, da diese Brüden jetzt unmittelbar mit dem Rauchgasstrom in den Kamin wandern.

Das erfindungsgemäße Verfahren ist somit besonders vorteilhaft dann anzuwenden, wenn chloridreiche Rauchgase eingesetzt werden sollen.

Um eine spontane Kristallisation von Calciumsulfat-Dihydrat bei hoher Schwefeldioxid-Belastung zu vermeiden, ist es notwendig, eine entsprechende Zusammensetzung des Feststoffes in der Nachstufenabsorptionssuspension einzustellen. Zur Steuerung des Kristallwachstums von Calciumsulfat-Dihydrat ist es somit notwendig, der Absorptionsmittelsuspension der Nachstufenabsorption eine ausreichende Menge an Impfkristallen zuzuführen.

Dies kann beispielsweise dadurch geschehen, daß ein Teil der Suspension aus der Vorstufenabsorption in die Nachstufenabsorption überführt wird. Vorzugsweise erfolgt dies in kontrollierter und gesteuerter Form und in Abhängigkeit der Belastung mit Schwefeldioxid. Durch diese Überführung von einem Teil der Suspension der Vorstufenabsorption in die Absorptionsmittelsuspension der Nachstufenabsorption wird gleichzeitig stets auch etwas unerwünschtes Chlorid in die Nachstufenabsorptionsstufe überführt. Die Menge an überführter Suspension und überführtem Chlorid ist jedoch hierbei wesentlich besser kontrollierbar und steuerbar als bei dem bisher erfolgten unerwünschten Überriß von Absorptionsmittelsuspension der Vorstufe in die Nachstufe.

Zur weiteren Reduzierung des Chloridgehaltes bei der Regelung der Feststoffzusammensetzung in der Nachstufenabsorption ist es möglich, einen Teil der zu überführenden Suspension in eine feststoffreiche und eine feststoffarme Fraktion aufzuteilen und nur die feststoffreiche Fraktion in die Nachstufenabsorption zu überführen und die feststoffarme Fraktion in die Vorstufenabsorption zurückzuführen. Hierdurch wird das in der feststoffarmen Fraktion gelöste Chlorid ebenfalls in die Vorstufenabsorption zurückgeführt und ein wesentlich geringerer Anteil an Chlorid mit der feststoffreichen Fraktion in die Nachstufenabsorption überführt. Eine derartige Auftrennung in eine feststoffreiche und eine feststoffarme Fraktion kann beispielsweise durch einen Hydrozyklon erfolgen.

Als eine weitere Alternative ist es möglich, den Suspensionstrom des Hydrozyklon-Oberlaufes der Gipsausschleusung zur Regelung der Feststoffzusammensetzung der Nachstufenabsorption zu verwenden. Dieser Hydrozyklon-Oberlauf enthält insbesondere feinteiligen Gips und ist deshalb besonders geeignet, das Kristallwachstum von Gips zu steuern.

Wenn man von diesem Hydrozyklon-Oberlauf durch einen zweiten Hydrozyklon die feinteiligen Feststoffe abtrennt und als Hydrozyklon-Unterlauf in die Absorptionsmittelsuspension der Nachstufenabsorption einleitet. gelangen optimale Mengen an Impfkristallen in diese Stufe, ohne größere Mengen unerwünschten Chlorids in die Nachstufenabsorption zu überführen.

## Ansprüche

1. Verfahren zum nassen Entfernen von Schwefeldioxid aus Rauchgasen unter Verwendung einer Kalkstein enthaltenden Absorptionsmittelsuspension, bei dem

a) im Sumpf einer Vorstufenabsorption im pH-Bereich von 4 bis 5 durch Einleiten von Luft in die Suspension Sulfit zum Sulfat oxidiert und grobkörniger Gips als feststoffreiche Suspension aus dem System ausgeschleust wird,

b) in einer Nachstufenabsorption im pH-Bereich von ca. 6 das Schwefeldioxid des Rauchgases durch die Absorptionsmittelsuspension als Sulfit gebunden und diese in einem Ablauf separat aufgefangen und in den Vorratstank für die Absorptionsmittelsuspension zurückgeführt wird,

c) die Wasserverluste der Vorstufenabsorption durch den Überlauf der Absorptionsmittelsuspension ausgeglichen,

d) die Wasserverluste der Nachstufenabsorption durch das Waschwasser einer nachgeschalteten Tropfenabscheidung ausgeglichen werden,

dadurch gekennzeichnet, daß die Nachstufenabsorption räumlich neben, aber oberhalb der Vorstufenabsorption und direkt oberhalb des Vorratstanks für die Absorptionsmittelsuspension durchgeführt wird.

2. Verfahren gemäß Anspruch 1, dadurch gekennzeichnet, daß zwischen Vorstufenabsorption und Nachstufenabsorption eine Tropfenabscheidung stattfindet.

3. Verfahren gemäß Ansprüchen 1 oder 2, dadurch gekennzeichnet, daß chloridreiche Rauchgase eingesetzt werden.

4. Verfahren gemäß einem der Ansprüche 1 bis 3, dadurch gekennzeichnet, daß ein Teil der Suspension aus der Vorstufenabsoption in die Nachstufenabsorption überführt wird.

5. Verfahren gemäß Anspruch 4, dadurch gekennzeichnet, daß dieser Teil der überführten Suspension in eine feststoffreiche und eine feststoffarme Fraktion aufgeteilt wird, wobei nur die feststoffreiche Fraktion in die Nachstufenabsorption überführt und die feststoffarme Fraktion in die Vorstufenabsorption zurückgeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 011 592  (RESEARCH COTTRELL INC.) <br> * Anspruch 22 * <br> --- | 1,2 | B 01 D  53/34 |
| A | DE-A-3 305 120  (UHDE GMBH) <br> * Ansprüche 1, 2 * <br> --- | 1,3-5 | |
| A | DE-A-3 431 835  (C. OTTO & CO. GMBH) <br> * Ansprüche 1, 4 * <br> --- | 1,2 | |
| A,P | DE-A-3 517 799 <br> (KNAUF-RESEARCH-COTTRELL GMBH) <br> * vollständiges Dokument * <br> ----- | 1 | |

RECHERCHIERTE
SACHGEBIETE (Int. Cl.4)

B 01 D  53/00

Der vorliegende Recherchenbericht wurde für alle Patentansprüche erstellt

| Recherchenort | Abschlußdatum der Recherche | Prüfer |
|---|---|---|
| BERLIN | 02-12-1987 | BERTRAM H E H |

EPO FORM 1503 03.82 (P0403)